# FASCICULE DE BREVET EUROPEEN

(11) **EP 2 375 084 B1**
(45) Date de publication et mention de la délivrance du brevet: **01.05.2013**
(21) Numéro de dépôt: 11159723.3
(22) Date de dépôt: 25.03.2011
(51) Int. Cl.: F15B 15/14

(54) **TOURELLE HEXAPODE COMPRENANT DES VERINS**
HEXAPOD ENTHALDEND HYDRAULISCHE AKTUATOREN
HEXAPOD TURRET INCLUDING HYDRAULIC ACTUATORS

(30) Priorité: 08.04.2010 FR 1052655
(43) Date de publication de la demande: 12.10.2011
(73) Titulaire: BIA, 78700 Conflans Ste Honorine (FR)
(72) Inventeur: Sellaouti, Ramzi, 92110 Clichy la Garenne (FR); Ben Ouezdou, Fathi, 92340 Bourg la Reine (FR); Namoun, Fayçal, 92400 Courbevoie (FR)
(74) Mandataire: Collet, Alain

(56) Documents cités:
- DE-A1- 19 608 132
- DE-C1- 4 117 538
- DE-U1- 7 700 917
- US-A- 5 350 054

## Description

L'invention concerne une tourelle hexapode et un vérin apte à être utilisé dans la tourelle hexapode.

Les tourelles hexapodes, également appelées plateformes de Gough-Stewart, sont utilisées pour réaliser un positionnement précis d'objets dans l'espace. Elles comprennent un socle fixe et un plateau mobile par rapport au socle. Le plateau peut se déplacer selon six degrés de libertés par rapport au socle sur lequel est fixé un objet dont on cherche à contrôler sa configuration en position et en orientation. Les utilisations de ce type de tourelles sont multiples. On les retrouve par exemple pour le positionnement de pièces mécaniques destinées à être usinées, pour le positionnement d'antennes paraboliques ou de télescopes, pour des simulateurs de vol ou encore pour effectuer des tests de comportement de matériels.

Une tourelle hexapode telle que celle décrite dans DE 4 117 538 comprend généralement six jambes de longueur réglables reliant le plateau mobile au socle. Les jambes sont reliées par paires au plateau mobile et au socle. Les paires sont alternées de façon à ce que les deux jambes d'une même paire associée au plateau mobile appartiennent à deux paires différentes associées au socle. Dans des tourelles hexapodes connues, chaque jambe comprend un vérin linéaire articulé à chacune de ses extrémités sur le socle et sur le plateau mobile au moyen d'une liaison sphérique à trois degrés de liberté en rotation. Le réglage coordonné de la longueur de chacune des six jambes permet de déplacer le plateau mobile selon six degrés de liberté.

Lors de déplacements du plateau mobile, les vérins sont tous amenés à se déplacer en rotation autour des rotules les reliant au socle. Les vérins peuvent être hydrauliques ou électriques. Ils sont généralement massifs et embarquent leur propre système de motorisation. Le déplacement des vérins prend une part importante dans l'inertie globale de la tourelle. Cette inertie pénalise les mouvements rapides de celle-ci.

L'invention vise à réduire l'inertie d'une tourelle hexapode afin de faciliter des mouvements rapides du plateau mobile.

A cet effet, l'invention a pour objet un vérin apte à être utilisé dans une tourelle hexapode, le vérin comprenant un corps, un piston mobile en translation par rapport au corps et une tige reliée au piston pour suivre son mouvement de translation et par l'intermédiaire de laquelle le vérin exerce un effort, caractérisé en ce que la tige est reliée au piston au moyen d'une liaison rotule.

L'invention a également pour objet une tourelle hexapode comprenant six vérins selon l'invention, la tourelle comprenant un socle et un plateau mobile, caractérisée en ce que les six vérins sont fixés au socle par leur corps et sont reliés au plateau mobile par l'intermédiaire de leur seconde liaison rotule.

L'invention sera mieux comprise et d'autres avantages apparaîtront à la lecture de la description détaillée d'un mode de réalisation donné à titre d'exemple, description illustrée par le dessin joint dans lequel :
la figure 1 représente schématiquement un vérin conforme à l'invention ;
la figure 2 représente un schéma cinématique d'une tourelle hexapode conforme à l'invention ;
la figure 3 représente un exemple de réalisation d'un vérin tel que schématisé sur la figure 1 :
la figure 4 représente un exemple de réalisation d'une tourelle hexapode telle que schématisée sur la figure 2.

Par souci de clarté, les mêmes éléments porteront les mêmes repères dans les différentes figures.

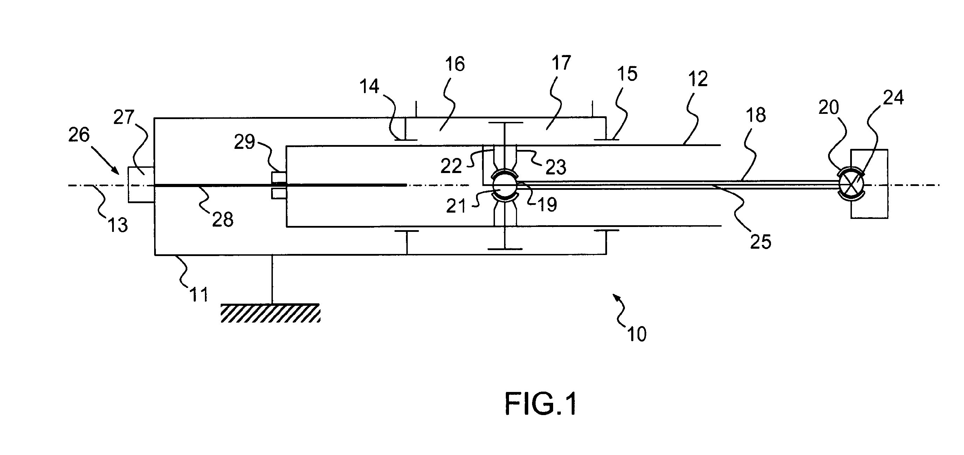

La figure 1 représente un vérin linéaire 10 comprenant un corps 11 et un piston 12 mobile en translation par rapport au corps 11 selon un axe longitudinal 13. Le piston 12 est guidé dans son mouvement de translation au moyen de deux paliers 14 et 15 appartenant au corps 11. Dans l'exemple représenté, le vérin est hydraulique, mais il est bien entendu que l'invention peut être mise en oeuvre pour d'autres modes de motorisation du vérin comme par exemple pour un vérin électrique ou pneumatique. Le vérin 10 est à double effet et comprend deux chambres 16 et 17 réalisées dans le corps 11 et séparées par le piston 12. Les deux chambres 16 et 17 sont alimentées par un fluide hydraulique sous pression. Une différence de pression du fluide hydraulique entre les deux chambres 16 et 17 permet la translation du piston 12 le long de l'axe 13. Il est également possible de mettre en oeuvre l'invention pour un vérin simple effet dans lequel une seule chambre est alimentée en fluide hydraulique. L'autre chambre peut être remplacée par un ressort permettant de ramener le piston 12 dans une position obtenue pour une pression nulle du fluide hydraulique.

Le vérin 10 comprend une tige 18 par l'intermédiaire de laquelle le vérin exerce un effort. Plus précisément, la tige 18 comprend deux extrémités 19 et 20. L'extrémité 19 est reliée au piston 12 et l'extrémité 20 prend appui sur un élément extérieur sur lequel s'exerce l'effort produit par le vérin 10. Dans un vérin de l'art antérieur la tige 18 est solidaire du piston 12 au niveau de l'extrémité 19. Selon l'invention, la tige 18 est reliée au piston au moyen d'une liaison rotule 21 située au niveau de l'extrémité 19. Cette liaison permet à la tige 18 de se déplacer angulairement par rapport à l'axe 13.

En utilisant un vérin hydraulique, la liaison rotule 21 est avantageusement, hydrostatique et est alimentée en fluide par prélèvement du fluide mis en oeuvre pour manoeuvrer le vérin 10. Le prélèvement peut se faire par un ou plusieurs canaux 22 et 23 reliant chacune des chambres 16 et 17 et la liaison rotule 21. De ce fait, la pression de fluide dans la liaison rotule 21 dépend de la pression de fluide dans les chambres 16 et 17. Ainsi plus le vérin est chargé, plus la pression dans au moins une des chambres 16 ou 17 est importante et plus le film hydrostatique créé dans la liaison rotule 21 est important.

Le vérin 10 peut comprendre une seconde liaison rotule 24 située à la seconde extrémité 20 de la tige 18. Cette seconde liaison rotule 24 permet de relier un objet au vérin 10. L'effort exercé par le vérin 10 transite par la première liaison rotule 21, la tige 18 et la seconde liaison rotule 24. Avantageusement, la seconde liaison rotule 24 est également hydrostatique et est alimentée en fluide par prélèvement du fluide mis en oeuvre pour manoeuvrer le vérin 10. Le prélèvement peut se faire par un canal 25 situé à l'intérieur de la tige 18 et reliant les deux liaisons rotule 21 et 24.

Le vérin peut comprendre un capteur 26 de position du piston 12 par rapport au corps 11 dans son mouvement de translation le long de l'axe 13. Le capteur 26 est par exemple magnétostrictif. Il comprend un boitier 27 solidaire du corps 11 et pouvant émettre une onde ultrasonore le long d'un barreau ferromagnétique 28. Un aimant 29 solidaire du piston 12 coulisse le long du barreau 29 lors du déplacement du piston 12 et modifie l'onde ultrasonore. Une mesure de cette onde effectuée dans le boitier 27 permet de déterminer la position du piston 12.

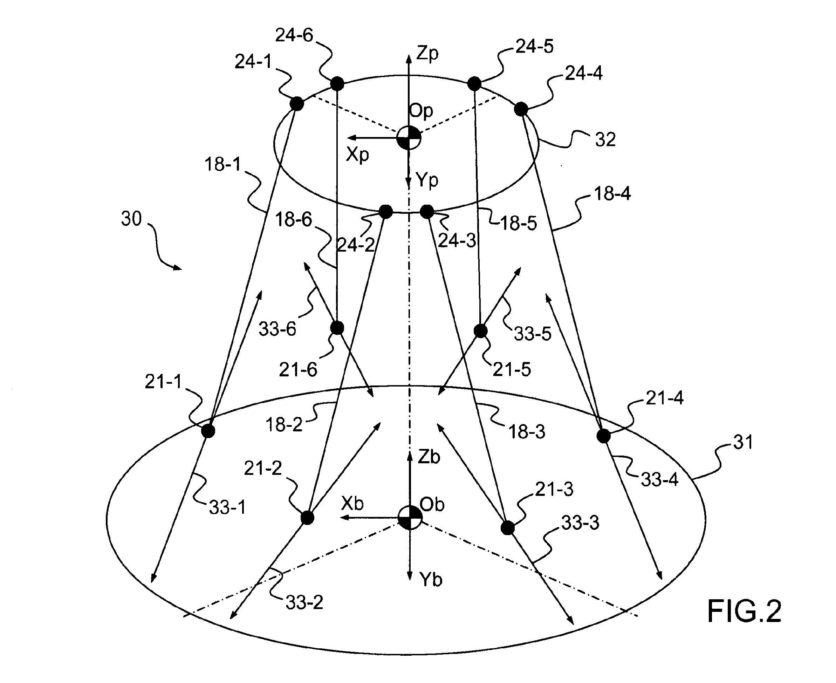

La figure 2 représente un schéma cinématique d'une tourelle hexapode 30 comprenant un socle 31, un plateau mobile 32 et six vérins 10 tels que décrits à l'aide de la figure 1. Le corps 11 de chacun des vérins 10 est fixé au socle 31 et les directions des mouvements de translation des pistons 12 sont représentées par six doubles flèches 33-1 à 33-6. Du fait de la fixation des corps 11 sur le socle 31, les directions 33-1 à 33-6 sont fixes dans l'espace dans un référentiel lié au socle 31. Les six tiges 18 et leurs liaisons rotules 21 et 24 portent des repères indicés correspondant aux directions : 18-1 à 18-6 pour les tiges, 21-1 à 21-6 pour les premières liaisons rotules et 24-1 à 24-6 pour les secondes liaisons rotules.

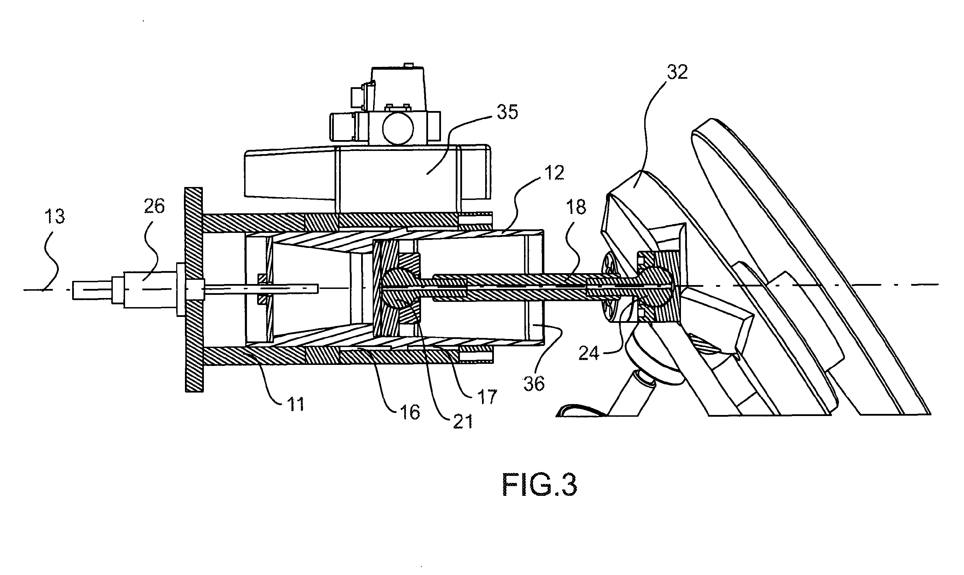

La figure 3 représente un exemple de réalisation d'un vérin 10. Sur cette figure, on retrouve le piston 12 pouvant se déplacer en translation le long de l'axe 13 dans le corps 11, la tige 18 dont les extrémités portent les liaisons rotules 21 et 24 ainsi qu'une partie du plateau mobile 32. Sur la figure 3 apparait un organe de commande hydraulique 35 du vérin 10. L'organe 35 comprend par exemple une servovalve permettant d'alimenter en fluide les deux chambres 16 et 17.

Dans l'art antérieur où le corps du vérin est susceptible de se déplacer lors des mouvements du plateau mobile, il est préférable de fixer un tel organe de commande sur le socle et non sur le corps du vérin. Pour limiter l'inertie du corps du vérin. La possibilité de déplacement relatif de l'organe de commande par rapport au corps du vérin impose l'utilisation de tuyaux souples alimentant les chambres du vérin en fluide hydraulique à partir de l'organe de commande. Le fait de fixer le corps 11 du vérin 10 au socle 31 permet de mettre en place des canalisations rigides entre l'organe 35 et le corps 11.

Avantageusement l'organe de commande hydraulique 35 du vérin 10 est fixé sur le corps 11. Le corps 11 étant fixe par rapport au socle 31, aucune inertie supplémentaire n'est générée par l'organe 35. Cette fixation sur le corps 11 permet de réduire la longueur des canalisations reliant l'organe 35 et le corps 11. Ceci permet de réduire les pertes de charge dans ces canalisations. Cet avantage prend de l'importance lorsque les déplacements du plateau mobile 32 doivent être rapides ce qui entraine des vitesses importantes de fluide hydraulique entre l'organe 35 et les chambres 16 et 17.

Le piston 12 a une forme tubulaire et comprend une ouverture 36 permettant de laisser passer la tige 18. L'ouverture 36 est par exemple circulaire autour de l'axe 13 et son diamètre doit être suffisant pour permettre un débattement angulaire de la tige 18 autour de l'axe 13 compatible avec le débattement maximum du plateau mobile 32.

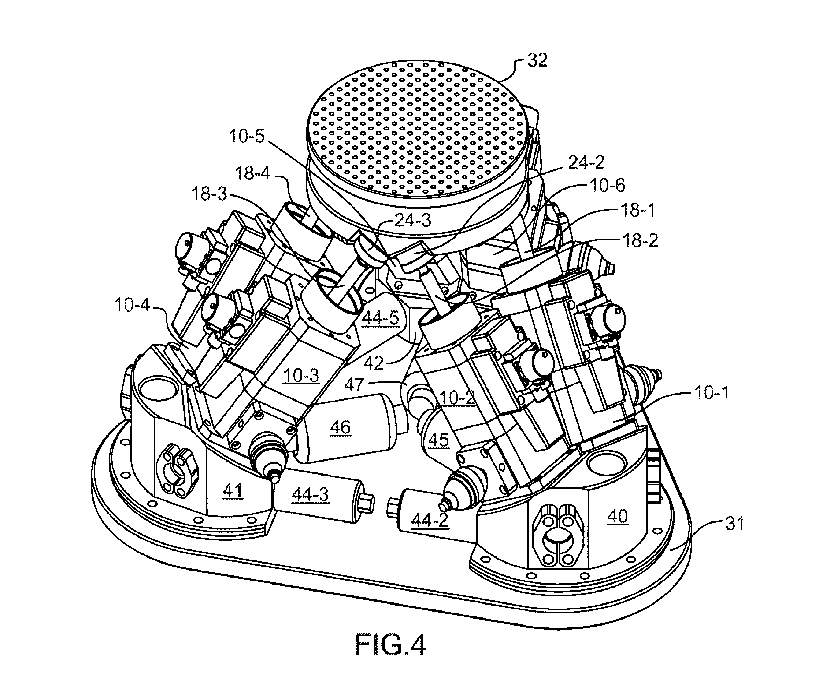

La figure 4 représente en perspective un exemple de réalisation d'une tourelle hexapode 30 telle que schématisée sur la figure 2. Les six vérins portent les repères 10-1 à 10-6. Ils sont tous identiques au vérin 10 décrit précédemment. Les corps 11 des différents vérins sont fixés sur le socle 31 par paire par l'intermédiaire de supports. Plus précisément, les vérins 10-1 et 10-2 sont fixés sur un support 40, les vérins 10-3 et 10-4 sont fixés sur un support 41 et les vérins 10-5 et 10-6 sont fixés sur un support 42. Les tiges 18-1 à 18-6 sont reliées au plateau mobile 32 par l'intermédiaire des liaisons rotules 24-1 à 24-6. Ces liaisons rotules sont regroupées par paires. Les paires de liaisons rotules 24-1 à 24-6 sont alternées par rapport aux paires de vérins regroupées par support. Plus précisément, les liaisons rotules 24-2 et 24-3 forment une première paire, les liaisons rotules 24-4 et 24-5 forment une deuxième paire et les liaisons rotules 24-6 et 24-1 forment une troisième paire.

La tourelle hexapode 30 comprend des réservoirs accumulateurs de fluide hydrauliques. Ces réservoirs contiennent du fluide hydraulique soit à haute pression soit à basse pression. L'organe de commande 35 associé à chaque vérin 10-1 à 10-6 permet de connecter les chambres de chaque vérin 10-1 à 10-6 soit au fluide à haute pression soit au fluide à basse pression. Tous ces réservoirs sont fixes par rapport au socle 31 et sont donc fixes par rapport au corps 11 de chacun des vérins 10-1 à 10-6. La tourelle hexapode 30 comprend par exemple un réservoir basse pression 44-1 à 44-6 associé respectivement à chaque vérin 10-1 à 10-6 et un réservoir haute pression 45, 46 et 47 commun à deux vérins. Plus précisément, un réservoir haute pression 45 est associé aux vérins 10-1 et 10-2, un réservoir haute pression 46 est associé aux vérins 10-3 et 10-4 et un réservoir haute pression 47 est associé aux vérins 10-5 et 10-6. Les réservoirs haute et basse pression peuvent être associés aux vérins 10-1 à 10-6 par l'intermédiaire des supports 40 à 42 sur lesquels les réservoirs sont fixés. Des canalisations rigides relient les réservoirs aux organes de commande 35 de chaque vérin 10-1 à 10-6. Un groupe hydraulique central peut fournir le fluide hydraulique sous pression aux différents réservoirs. Ce groupe peut être connecté aux différents supports 40 à 42.

## Revendications

1. Tourelle hexapode comprenant un socle (31), un plateau mobile (32) et six vérins (10-1 à 10-6), chacun des vérins (10-1 à 10-6) comprenant un corps (11), un piston (12) mobile en translation par rapport au corps (11) et une tige (18) reliée au piston (12) pour suivre son mouvement de translation et par l'intermédiaire de laquelle le vérin (10-1 à 10-6) exerce un effort, **caractérisée en ce que** pour chacun des vérins (10-1 à 10-6), la tige (18) est reliée au piston (12) au moyen d'une liaison rotule (21) à une première (19) de ses extrémités (19, 20) et **en ce que** chacun des vérins (10-1 à 10-6) comprend une seconde liaison rotule (24) située à une seconde extrémité (20) de la tige (18) et **en ce que** les six vérins (10-1 à 10-6) sont fixés au socle (31) par leur corps (11) et sont reliés au plateau mobile (32) par l'intermédiaire de leur seconde liaison rotule (24-1 à 24-6).

2. Tourelle selon la revendication 1, **caractérisée en ce que** les six vérins (10-1 à 10-6) sont hydrauliques et **en ce que**, pour chacun des vérins (10-1 à 10-6), la liaison rotule (21) est hydrostatique et est alimentée en fluide par prélèvement d'un fluide mis en oeuvre pour manoeuvrer le vérin (10).

3. Tourelle selon la revendication 2, **caractérisée en ce que** pour chacun des vérins (10-1 à 10-6), la seconde liaison rotule (24) est hydrostatique et est alimentée en fluide par prélèvement du fluide mis en oeuvre pour manoeuvrer le vérin (10).

4. Tourelle selon la revendication 3, **caractérisée en ce que** pour chacun des vérins (10-1 à 10-6), l'alimentation en fluide de la seconde liaison rotule est réalisée au moyen d'un canal (25) situé dans la tige (18) et reliant les deux liaisons rotules (21, 24).

5. Tourelle selon l'une quelconque des revendications 2 à 4, **caractérisée en ce que** chacun des vérins (10-1 à 10-6) comprend deux chambres (16, 17) réalisées dans le corps (11) et séparées par le piston (12) et **en ce que** pour chacun des vérins (10-1 à 10-6), du fluide est prélevé par un ou plusieurs canaux (22, 23) reliant chacune des chambres (16, 17) et la liaison rotule (21).

6. Tourelle selon l'une des revendications précédentes, **caractérisée en ce que** chacun des vérins (10-1 à 10-6) comprend un organe de commande hydraulique (35) du vérin (10) et **en ce que** l'organe (35) est fixé sur le corps (11) du vérin (10).

7. Tourelle selon l'une des revendications précédentes, **caractérisée en ce qu'**elle comprend des supports (40, 41, 42) fixés au socle (31) et sur lesquels sont fixés les corps (11) des vérins (10-1 à 10-6) par paires, des réservoirs (44-1 à 44-6, 45, 46 et 47) accumulateurs de fluide hydrauliques associés aux vérins (10-1 à 10-6) et fixés sur les supports (40, 41,42).

## Claims

1. A hexapod turret comprising a base (31), a movable platen (32) and six cylinders (10-1 to 10-6), each of said cylinders (10-1 to 10-6) comprising a body (11), a piston (12) designed for translational movement relative to said body (11) and a rod (18) that is connected to said piston (12) to follow its translational movement and through which the cylinder (10-1 to 10-6) exerts a force, **characterised in that** for each of said cylinders (10-1 to 10-6), said rod (18) is connected to said piston (12) by means of a ball joint (21) at a first (19) of its ends (19, 20), and **in that** each of said cylinders (10-1 to 10-6) comprises a second ball joint (24) that is located at a second end (20) of said rod (18), and **in that** said six cylinders (10-1 to 10-6) are fixed to said base (31) via their body (11) and are connected to said movable platen (32) by means of their second ball joint (24-1 to 24-6).

2. The turret according to claim 1, **characterised in that** said six cylinders (10-1 to 10-6) are hydraulic and **in that**, for each of said cylinders (10-1 to 10-6), said ball joint (21) is hydrostatic and is supplied with fluid taken from a fluid that is implemented to manoeuvre said cylinder (10).

3. The turret according to claim 2, **characterised in that** for each of said cylinders (10-1 to 10-6), said second ball joint (24) is hydrostatic and is supplied with fluid taken from a fluid that is implemented to manoeuvre said cylinder (10).

4. The turret according to claim 3, **characterised in that** for each of said cylinders (10-1 to 10-6), the fluid supply of said second ball joint is provided through a channel (25) that is located inside said rod (18) and connects said two ball joints (21, 24).

5. The turret according to any one of claims 2 to 4, **characterised in that** each of said cylinders (10-1 to 10-6) comprises two chambers (16, 17) that are realised in said body (11) and separated by said piston (12), and **in that** for each of said cylinders (10-1 to 10-6), fluid is taken via one or more channels (22, 23) that connect each of said chambers (16, 17) and said ball joint (21).

6. The turret according to any one of the preceding claims, **characterised in that** each of said cylinders (10-1 to 10-6) comprises a component (35) for hydraulically controlling said cylinder (10), and **in that** said component (35) is fixed to said body (11) of said cylinder (10).

7. The turret according to any one of the preceding claims, **characterised in that** it comprises supports (40, 41, 42) that are fixed to said base (31) and on which said bodies (11) of said cylinders (10-1 to 10-6) are fixed in pairs, hydraulic fluid accumulation reservoirs (44-1 to 44-6, 45, 46 and 47) associated with said cylinders (10-1 to 10-6) and fixed to said supports (40, 41, 42).

## Patentansprüche

1. Hexapod-Kopf, der eine Basis (31), eine bewegliche Platte (32) und sechs Zylinder (10-1 bis 10-6) umfasst, wobei jeder der Zylinder (10-1 bis 10-6) einen Körper (11), einen relativ zum Körper (11) translational beweglichen Kolben (12) und einen Stab (18) umfasst, der mit dem Kolben (12) verbunden ist, um dessen Translationsbewegung zu folgen, und über den der Zylinder (10-1 bis 10-6) eine Kraft ausübt, **dadurch gekennzeichnet, dass** der Stab (18) für jeden der Zylinder (10-1 bis 10-6) mittels eines Kugelgelenks (21) mit dem Kolben (12) an einem ersten (19) seiner Enden (19, 20) verbunden ist, und dadurch, dass jeder der Zylinder (10-1 bis 10-6) ein zweites Kugelgelenk (24) aufweist, das sich an einem zweiten Ende (20) des Stabs (18) befindet, und dadurch, dass die sechs Zylinder (10-1 bis 10-6) an der Basis (31) über ihren Körper (11) befestigt und mit der beweglichen Platte (32) mittels ihres zweiten Kugelgelenks (24-1 bis 24-6) verbunden sind.

2. Kopf nach Anspruch 1, **dadurch gekennzeichnet, dass** die sechs Zylinder (10-1 bis 10-6) hydraulisch sind, und dadurch, dass das Kugelgelenk (21) für jeden der Zylinder (10-1 bis 10-6) hydrostatisch ist und mit Fluid versorgt wird, indem zum Manövrieren des Zylinders (10) benutztes Fluid genommen wird.

3. Kopf nach Anspruch 2, **dadurch gekennzeichnet, dass** das zweite Kugelgelenk (24) für jeden der Zylinder (10-1 bis 10-6) hydrostatisch ist und mit Fluid versorgt wird, indem zum Manövrieren des Zylinders (10) benutztes Fluid genommen wird.

4. Kopf nach Anspruch 3, **dadurch gekennzeichnet, dass** die Fluidversorgung des zweiten Kugelgelenks für jeden der Zylinder (10-1 bis 10-6) durch einen Kanal (25) zugeführt wird, der sich in dem Stab (18) befindet und die beiden Kugelgelenke (21, 24) verbindet.

5. Kopf nach einem der Ansprüche 2 bis 4, **dadurch gekennzeichnet, dass** jeder der Zylinder (10-1 bis 10-6) zwei Kammern (16, 17) umfasst, die in dem Körper (11) realisiert sind und von dem Kolben (12) getrennt werden, und dadurch, dass für jeden der Zylinder (10-1 bis 10-6) Fluid durch einen oder mehrere Kanäle (22, 23) genommen wird, die die einzelnen Kammern (16, 17) und das Kugelgelenk (21) verbinden.

6. Kopf nach einem der vorherigen Ansprüche, **dadurch gekennzeichnet, dass** jeder der Zylinder (10-1 bis 10-6) einen Mechanismus (35) zum hydraulischen Steuern des Zylinders (10) umfasst, und dadurch, dass der Mechanismus (35) an dem Körper (11) des Zylinders (10) befestigt ist.

7. Kopf nach einem der vorherigen Ansprüche, **dadurch gekennzeichnet, dass** er Stützen (40, 41, 42) umfasst, die an der Basis (31) befestigt sind und auf denen die Körper (11) der Zylinder (10-1 bis 10-6) paarweise befestigt sind, wobei Hydraulikflüssigkeits-Sammelreservoire (44-1 bis 44-6, 45, 46 und 47) mit den Zylinder (10-1 bis 10-6) assoziiert und an den Stützen (40, 41, 42) befestigt sind.
